# EUROPÄISCHE PATENTSCHRIFT

(11) **EP 0 876 264 B1**
(45) Veröffentlichungstag und Bekanntmachung des Hinweises auf die Patenterteilung: **10.11.1999**
(21) Anmeldenummer: 97915267.5
(22) Anmeldetag: 28.01.1997
(51) Int. Cl.: B60Q 1/14

(54) **AUTOMATISCHER LICHTSCHALTER**
AUTOMATIC LIGHT SWITCH
COMMUTATEUR D'ECLAIRAGE AUTOMATIQUE

(30) Priorität: 28.01.1996 DE 29601321 U; 28.08.1996 DE 19634864; 17.09.1996 DE 19637775
(43) Veröffentlichungstag der Anmeldung: 11.11.1998
(73) Patentinhaber: Meierl, Thomas, 85459 Berglern (DE); Mikschl, Herbert, 85521 Ottobrunn (DE)
(72) Erfinder: Meierl, Thomas, 85459 Berglern (DE); Mikschl, Herbert, 85521 Ottobrunn (DE)
(74) Vertreter: VOSSIUS & PARTNER
(86) Internationale Anmeldenummer: DE9700150
(87) Internationale Veröffentlichungsnummer: WO9727077

(56) Entgegenhaltungen:
- DE-C- 3 927 878
- FR-A- 2 658 973
- GB-A- 2 267 341
- PATENT ABSTRACTS OF JAPAN vol. 10, no. 286 (M-521) [2342] , 27.September 1986 & JP 61 105245 A (NIPPON SOKEN INC)

## Beschreibung

Die vorliegende Erfindung betrifft eine Vorrichtung und ein Verfahren zum automatischen Schalten einer Lichtquelle, insbesondere eine Vorrichtung und ein Verfahren zum automatischen Schalten der Außenbeleuchtung eines Kraftfahrzeuges.

Automatische Schalter zum Schalten einer Lichtquelle, insbesondere zum Schalten der Außenbeleuchtung von Kraftfahrzeugen sind bekannt. Gerade bei der Verwendung von automatischen Lichtschaltern in Kraftfahrzeugen wird dem Fahrer bei stark schwankenden Umgebungslichtverhältnissen (z.B. beim Durchfahren von Tunnels) das ständige und lästige Ein- und Ausschalten der Außenbeleuchtung von einem automatischen Lichtschalter abgenommen. Eine solche Vorrichtung zur Betätigung der Außenbeleuchtung eines Kraftfahrzeuges ist z.B. aus dem deutschen Gebrauchsmuster DE 92 11 597 bekannt. Diese Vorrichtung zeichnet sich durch einen als Dämmerungsschalter ausgebildeten Lichtsensor aus, der über ein Schaltrelais bei einer bestimmten Verringerung der das Fahrzeug umgebenden Helligkeit die Beleuchtung des Fahrzeugs einschaltet und bei einer bestimmten Mindesthelligkeit wieder ausschaltet.

Bekannte automatische Lichtschalter schalten also die Lichtquelle in Abhängigkeit von der die Lichtquelle umgebenden Helligkeit bei Unter- bzw. Überschreitung einer bestimmten Grenzhelligkeit lediglich ein bzw. wieder aus. Es wird nur ein Wechsel zwischen Helligkeit und Dunkelheit erkannt, wie es z.B. beim Ein- oder Ausfahren in oder aus einem Tunnel auftritt. Veränderungen der Tageslichtverhältnisse, die zwischen einem bloßen Hell-Dunkelübergang liegen, z.B. bei Nebel oder Regen, können von den bekannten automatischen Lichtschaltern jedoch nicht erkannt werden. Vertraut jedoch der Fahrer auf das automatische Einschalten des Lichtes, kann dies zu erheblichen Sicherheitsrisiken führen.

Dieselben Überlegungen lassen sich beispielsweise auch auf die automatische Steuerung der Straßenbeleuchtung übertragen.

Die DE-A-39 27 878 betrifft ein Warngerät für Kfz mit einem photoelektrischen Lichtsensor, wobei die Ansprechschwelle des Lichtsensors im sichtbaren Spektralbereich und/oder den daran unmittelbar anschließenden Bereichen für Licht größerer Wellenlänge niedriger ist als Licht geringeter Wellenlänge.

Demgegenüber liegt der Erfindung die Aufgabe zugrunde, eine Vorrichtung und ein Verfahren zum automatischen Schalten einer Lichtquelle bereitzustellen, so daß die Lichtquelle besser entsprechend den menschlichen Bedürfnissen geschaltet wird. Diese Aufgabe wird mit den Merkmale der Ansprüche gelöst.

Mittels der Meßergebnisse (Intensität, Strahlungsanteile in unterschiedlichen Wellenlängen bereichen) von mindestens zwei Sensoren weiden erfindungsgemäß die Lichtverhältnisse besser erkannt.

Um eine Lichtquelle in Abhängigkeit von der spektralen Zusammensetzung des Umgebungslichtes schalten zu können, wird gemäß der vorliegenden Erfindung vorzugsweise auf die Farbtemperatur zuruckgegriffen, die als Hilfsgröße zur Benennung von Farbmischungen dient. Die Farbtemperatur beschreibt die Farbe bzw. die spektrale Zusammensetzung des Umgebungslichtes.

In einer bevorzugten Ausgestaltung kann nach der erfindungsgemäßen Vorrichtung bzw. nach dem Verfahren das Schalten der Lichtquelle in Abhängigkeit von Über- oder Unterschreiten eines oder mehrerer Schwellwerte (z.B. der Farbtemperatur oder bestimmter spektraler Bereiche) oder mittels einer Zuordnungstabelle geschehen. Eine entsprechende Einrichtung zum Vergleichen der entsprechenden Werte kann vorgesehen sein.

Folgende Tabelle nennt beispielhaft einige Farbtemperaturwerte und Lichtverhältnisse, die diesen Farbtemperaturwerten entsprechen:

| Farbtemperatur | Entsprechende Lichtverhältnisse |
|---|---|
| 2000 K | Glühlampen bis 1000 Watt |
| 5000 K | Durchschnittliches Tageslicht |
| 6000 K | Heller Sonnenschein bei blauem Himmel |
| 7000 K | Leicht bewölkter Himmel |
| 8000 K | Diesiger Himmel |
| 9000 K | Abendnebel |
| 10000 K | Dicht bewölkter Himmel |

Wird eine Lichtquelle in Abhängigkeit von der Farbtemperatur des Umgebungslichtes geschaltet, kann nicht nur zwischen Tag und Nacht unterschieden, sondern auch bei schlechten Sichtverhältnissen, z.B. bei Nebel oder Regen, tagsüber ein automatisches Einschalten der Lichtquelle bewirkt werden.

In einer bevorzugten Ausführungsform weist die Einrichtung zum Schalten der Lichtquelle mindestens zwei Sensoren, wie etwa Photoelemente auf, die entsprechend der einfallenden Lichtleistung je Flächeneinheit, also der Bestrahlungsstärke bzw. der Beleuchtungsstärke, ein Signal ausgeben. Mögliche Sensoren sind Sensoren zum Bestimmen der Intensität des einfallenden Lichts, Sensoren zum Bestimmen eines Anteils einer Strahlung eines ersten Wellenlängenbereichs des einfallenden Lichts und/oder Sensoren zum Bestimmen eines Anteils einer Strahlung eines zweiten Wellenlängenbereichs des einfallenden Lichts. Beispielsweise kann ein Sensor zur Bestimmung des Anteils einer kurzwelligen Strahlung, wie etwa blauem Licht, und ein Sensor zur Bestimmung des Anteils einer langwelligen Strahlung, wie etwa rotem Licht, vorgesehen sein. Die Schalteinrichtung kann eine Kombination aus mindestens zwei dieser Meßsensoren aufweisen (z.B. Tageslichtsensor + Sensor für kurzwelliges Licht), es ist jedoch auch möglich, mehrere Sensoren zu kombinieren, wie etwa Tageslichtsensor/Sensor für kurzwelliges Licht/Sensor für langwelliges Licht.

Weiterhin ist es möglich, mehrere Sensorpaare oder Sensortripel bereitzustellen. Bei Verwendung des erfindungsgemäßen automatischen Lichtschalters in einem Kraftfahrzeug ist es somit möglich, sowohl im Frontbereich als auch im Heckbereich des Fahrzeugs ein Sensorpaar oder -tripel vorzusehen und die erhaltenen Meßergebnisse gemeinsam auszuwerten. Dies ist dann von Vorteil, wenn beispielsweise aufgrund einer tiefstehenden Sonne im Frontbereich ein Vielfaches der im Heckbereich auftreffenden Lichtleistung gemessen wird.

Als Sensoren zur Bestimmung des kurzwelligen oder langwelligen Anteils des einfallenden Lichtes bzw. des Blau- oder Rotanteils können die gleichen Sensoren wie zur Bestimmung der gesamten Intensität des Tageslichtes verwendet werden, wobei diese dann jedoch mit geeigneten Filtern versehen sind.

Es können sowohl Einfeldsensoren als auch Mehrfeldsensoren z.B. mit gleichen oder verschiedenen Meßwinkeln verwendet werden.

Mittels der bereitgestellten Sensoren wird in der erfindungsgemäßen Vorrichtung die spektrale Zusammensetzung des einfallenden Lichtes bestimmt, beispielsweise über das Verhältnis "Anteil an blauem Licht" zu "Anteil an rotem Licht". Den unterschiedlichen spektralen Zusammensetzungen des Umgebungslichtes sind entsprechende Farbtemperaturwerte zugeordnet, anhand derer mittels der erfindungsgemäßen Vorrichtung nicht nur zwischen "Hell" und "Dunkel" unterschieden werden kann, sondern auch Lichtverhältnisse, wie Nebel und Regen erkannt werden können, bei denen bekannte automatische Lichtschalter wegen der nach wie vor vorliegenden Helligkeit nicht ansprechen würden. In einer bevorzugten Ausführungsform wird bei der erfindungsgemäßen Schaltvorrichtung der bestimmte Farbtemperaturwert mit mindestens einem Schwellwert (z.B. 7000 K) verglichen und gegebenenfalls ein Schalten der Lichtquelle veranlaßt.

Nebel zeichnet sich in der Regel durch sehr diffuse Strahlung aus und die Lichtverhältnisse sind wenig schwankend bzw. relativ konstant. Abhängig von der Tageszeit und der Dichte des Nebels erscheint dieser unterschiedlich grau. Wird die ermittelte Tageslicht-Beleuchtungsstärke mit der ermittelten Farbtemperatur geeignet in Beziehung gesetzt, kann auf die unterschiedlichen Graustufen geschlossen werden und somit auf Nebel im allgemeinen und auf die Dichte des Nebels im besonderen. Für die Realisierung der Erfindung bedeutet dies, daß für diesen Fall ein Schwellwert zum Einschalten des Lichts beispielsweise bei einer Farbtemperatur von ca. 7000 K und einer Beleuchtungsstärke von ca. 6000 lx gesetzt werden kann. Auf diese Weise kann z.B. eine Tabelle mit Schwellwerten zum Schalten der Lichtquelle erstellt werden.

Im folgenden soll die Funktionsweise beispielhaft für die Verwendung eines Sensortripels "Tageslicht/Blaues Licht/Rotes Licht" erläutert werden. Bei normalen Tageslichtverhältnissen (z.B. Blauer Himmel) würde der Tageslichtsensor den Zustand "Tag" ermitteln. Von den gemessenen Anteilen an rotem und blauem Licht kann auf die spektrale Zusammensetzung bzw. die Farbtemperatur des Lichtes bei blauem Himmel geschlossen werden. Zöge nun Nebel auf, würde der Tageslichtsensor alleine betrachtet kein Einschalten des Lichtes bewirken, da wegen der vorherrschenden Helligkeit bei Nebel nach wie vor "Tag" angezeigt werden würde. Jedoch haben sich bei Nebel die Rot- und Blauanteile im Vergleich zum blauen Himmel verändert und diese neue spektrale Zusammensetzung bzw. Farbtemperatur führt nun (beispielsweise über einen Vergleich mit einem oder mehreren Schwellwerten) dazu, daß die Lichtquelle trotzdem eingeschaltet wird.

Ferner bevorzugt ist die Bereitstellung eines Feuchtesensors zur Messung der relativen Luftfeuchtigkeit. Außerdem kann das Schalten der Lichtquelle mittels einer Verzögerungseinrichtung erfolgen. Dadurch lassen sich kurze Schwankungen der Lichtverhältnisse, wie z.B. beim Durchfahren einer Allee, ausgleichen. Weiter ist es bevorzugt, vor dem Schalten der Lichtquelle ein akustisches und/oder optisches Warnsignal auszugeben. Auch eine Einrichtung zum Durchführen eines Selbsttests der Schaltvorrichtung kann vorgesehen sein. Bevorzugt ist auch die zusätzliche Möglichkeit der manuellen Betätigung der Lichtquelle.

In einer weiteren Ausführungsform weist der erfindungsgemäße automatische Lichtschalter eine Einrichtung auf, die einerseits die gesamte Intensität des einfallenden Lichtes bestimmt und andererseits die Intensität nur eines bestimmten Wellenlängenbereiches ermittelt und über einen Vergleich dieser beiden Meßwerte die Lichtquelle schaltet. Dazu kann die Einrichtung aus unterschiedlichen Sensoren bestehen.

Nachfolgend soll die Funktionsweise beispielhaft für einen Sensor zum Bestimmten der Intensität des einfallenden Lichts und einen Sensor zum Bestimmen eines sichtbaren roten Bestandteils des Lichts beschrieben werden.

Bei gutem Wetter und hellen Lichtverhältnissen würde der Intensitätssensor ausreichend Licht über einem geeignet gewählten Schwellwert ermitteln, um das Einschalten der Lichtquelle nicht erforderlich zu machen. Der Rotsensor würde einen bestimmten Anteil an rotem Licht ermitteln, der über einem zweiten geeignet gewählten Schwellwert liegt.

Beim Aufzug von Nebel oder Regen würde jedoch dann die Lichtquelle eingeschaltet, obgleich der Intensitätssensor gegebenenfalls kein ausreichendes Abfallen des Lichts unter den gewählten Schwellwert ermitteln wurde, der Rotsensor hingegen hat einen Abfall des roten Lichts unter den zweiten Schwellwert ermittelt und das Einschalten der Lichtquelle veranlaßt.

Das erfindungsgemäße Verfahren zum automatischen Schalten einer Lichtquelle zeichnet sich dadurch aus, daß die spektrale Zusammensetzung des Lichtes einer Umgebung bestimmt wird, ein Farbtemperaturwert ermittelt wird, der der spektralen Zusammensetzung des Umgebungslichtes entspricht und die Lichtquelle in Abhängigkeit von dem ermittelten Farbtemperaturwert geschaltet wird. Wird das erfindungsgemäße Verfahren beispielsweise zum Schalten einer Lichtquelle innerhalb eines Gebäudes, wie etwa einer Montagehalle verwendet, so kann bezüglich der Erfassung des Umgebungslichtes sowohl auf die Lichtverhältnisse innerhalb des Gebäudes und/oder außerhalb zurückgegriffen werden.

Es ist bevorzugt, bei dem erfindungsgemäßen Verfahren eine Kombination aus zwei der folgenden drei Messungen vorzunehmen:
- Messung der Intensität des einfallenden Lichtes,
- Messung eines Anteils einer Strahlung eines ersten Wellenlängenbereichs des einfallenden Lichts und
- Messung eines Anteils einer Strahlung eines zweiten Wellenlängenbereichs des einfallenden Lichts.
   Wie schon bei obiger Vorrichtung kann hier der Anteil an kurzwelliger bzw. langwelliger Strahlung, insbesondere der Anteil an blauem bzw. rotem Licht gemessen werden. Es ist bevorzugt, bei dem erfindungsgemäßen Verfahren anhand der gemessenen Werte die spektrale Zusammensetzung des einfallenden Lichtes zu bestimmen, um anhand dieser auf die entsprechende Farbtemperatur zu schließen.

Die erfindungsgemäße Vorrichtung und das erfindungsgemäße Verfahren können nicht nur in einem Kraftfahrzeug verwendet, sondern auch bei Beleuchtungen in oder an Gebäuden (z.B. Wohnhäuser) oder bei Außenbeleuchtungen (z.B. Straßenbeleuchtung) eingesetzt werden.

Der Meßbereich kann auf einen bestimmten Winkelbereich beschränkt sein, beispielsweise 15°. Weiterhin besteht die Möglichkeit, aus verschiedenen Winkelbereichen zu wählen.

Die Erfindung wird nachstehend mit Bezug auf die beigefügten Zeichnungen näher erläutert. Es zeigen:
- Fig. 1: ein Übersichtsschaltbild einer erfindungsgemäßen Ausführungsform der Vorrichtung zum automatischen Schalten einer Lichtquelle;
- Fig. 2: ein weiteres Übersichtsschaltbild einer erfindungsgemäßen Ausführungsform;
- Fig. 3: eine Spannungsaufbereitungsschaltung;
- Fig. 4: eine Anpaßschaltung einer erfindungsgemäßen Vorrichtung;
- Fig. 5: die Verwendung eines Mikrokontrollers in der erfindungsgemäßen Vorrichtung;
- Fig. 6: einen Ablaufplan für die erfindungsgemäße Vorrichtung;
- Fig. 7: einen Ablaufplan bezüglich der Auswertung der gemessenen Lichtwerte;
- Fig. 8: einen Ablaufplan bezüglich des Spannungseinschaltvorganges;
- Fig. 9: einen Ablaufplan bezüglich der Initialisierung eines CAN-Busses,
- Fig. 10: einen Ablaufplan bezüglich des "Bereit"-Zustands der erfindungsgemäßen Vorrichtung;
- Fig. 11: einen Ablaufplan bezüglich des "Bereit für Licht"-Zustandes der erfindungsgemäßen Vorrichtung;
- Fig. 12: einen Ablaufplan bezüglich des "Licht An"-Zustandes der erfindungsgemäßen Vorrichtung; und
- Fig. 13: einen Ablaufplan bezüglich des Lichtausschaltvorganges der erfindungsgemäßen Vorrichtung.

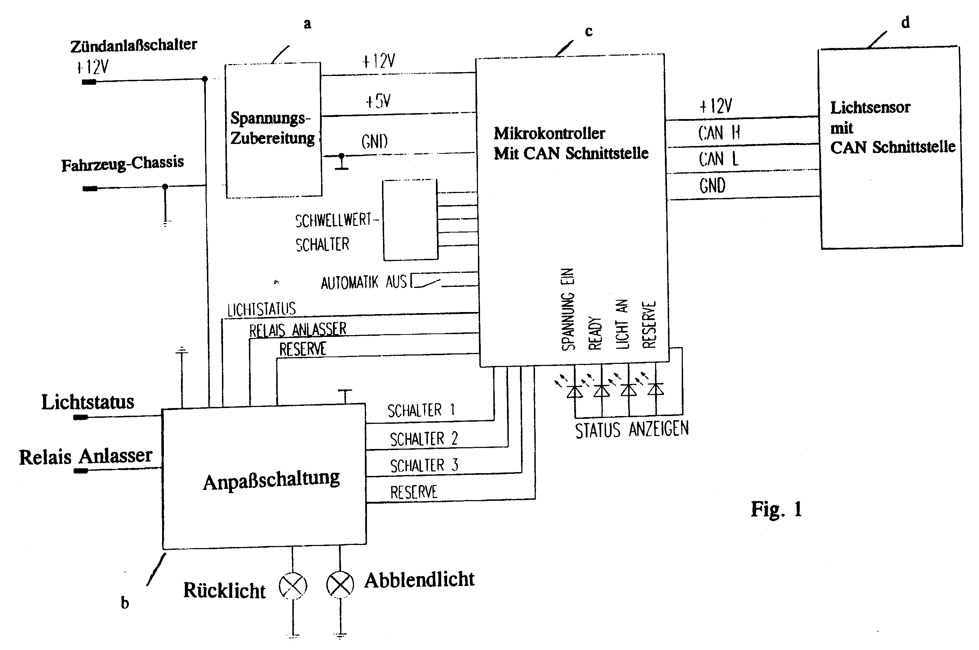

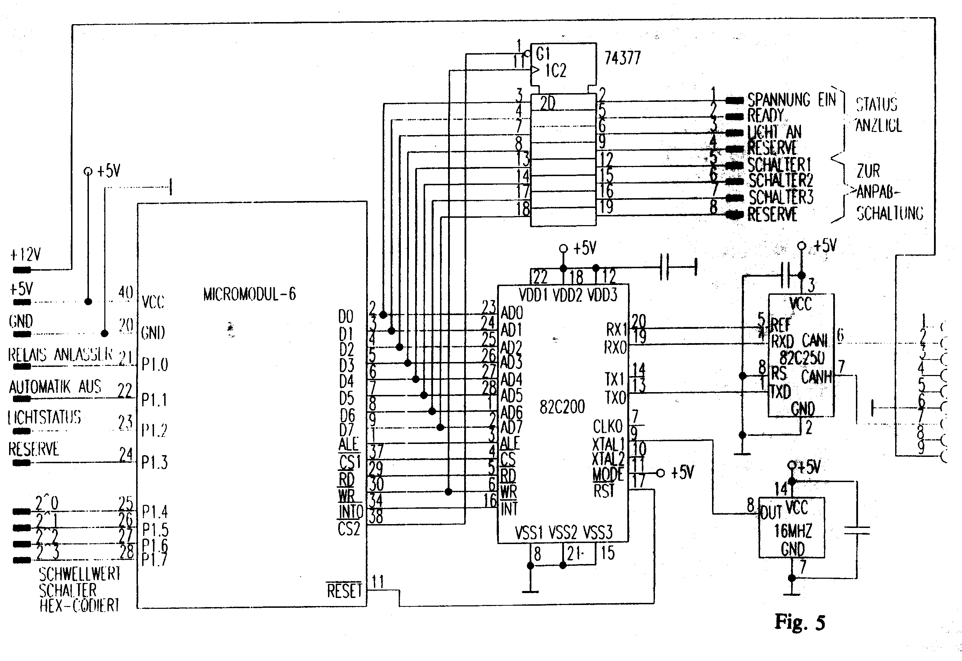

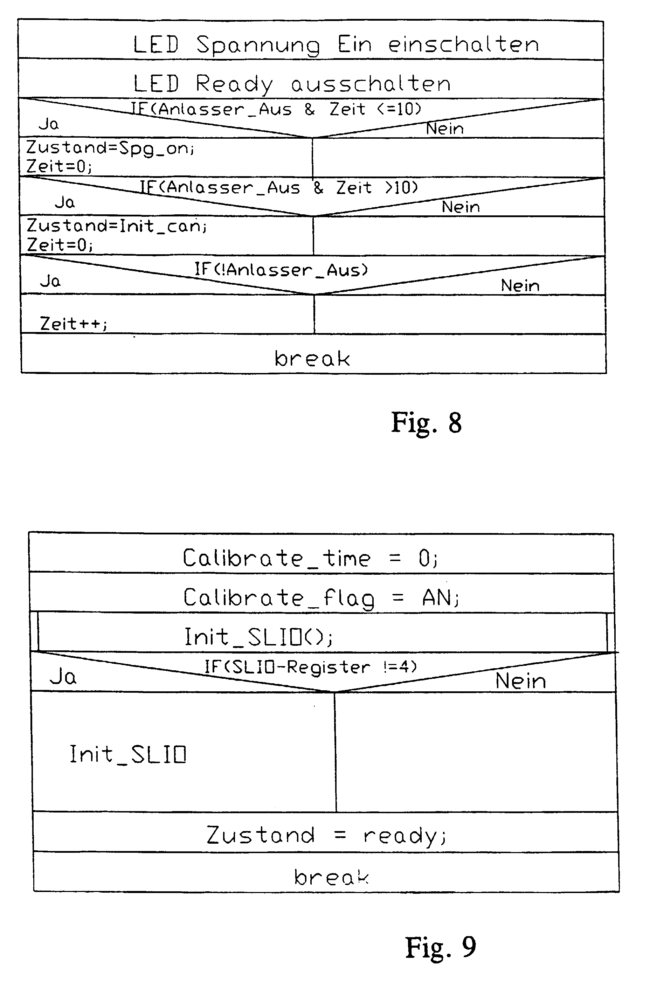

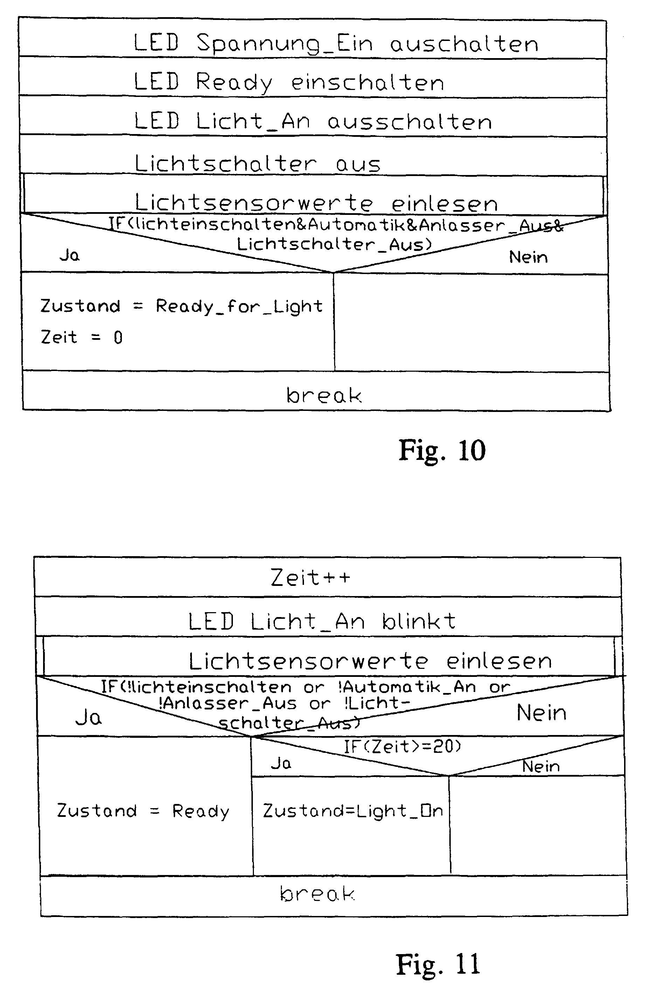

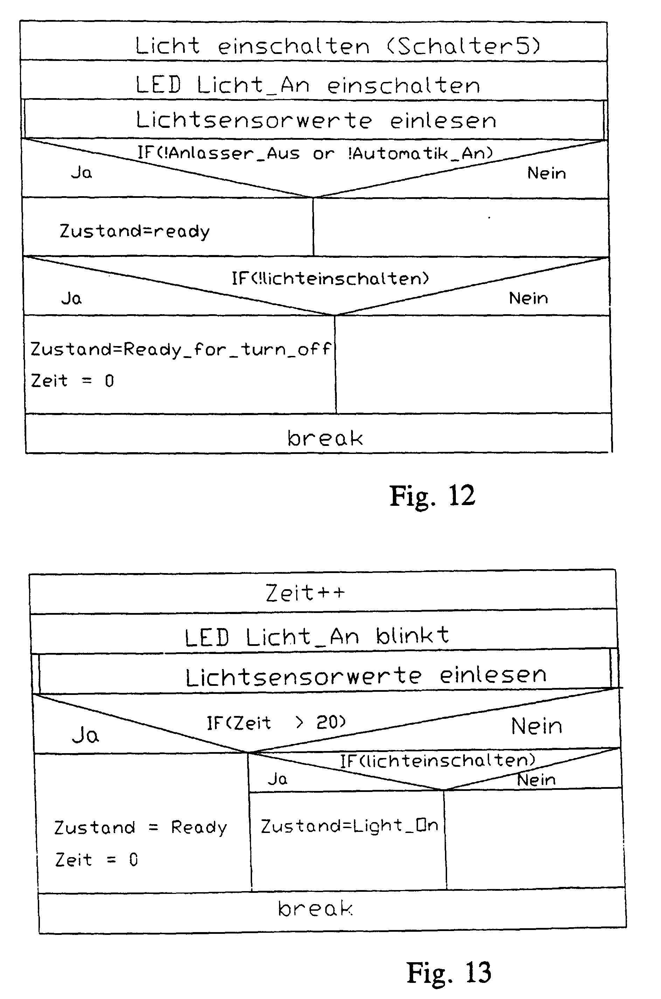

Wie anhand der Figuren 1 bis 13 zu erkennen ist, kann die erfindungsgemäße Vorrichtung zum automatischen Schalten einer Lichtquelle mit einer digitalen Auswerteschaltung betrieben werden. Dazu können Analog/Digitalwandler direkt an den Sensoren vorgesehen sein. Die von den Sensoren d gelieferten digitalen Meßdaten können über einen CAN-Bus an einen Mikroprozessor c zur Auswertung weitergeleitet werden. Über eine geeignete Anpaßschaltung b und mittels einer Spannungs-Aufbereitung a werden die jeweiligen Lichtsensoren sowie der Mikrokontroller zur Auswertung mit Spannung versorgt. Fig. 1 zeigt den prinzipiellen Aufbau eines erfindungsgemäßen Lichtschalters mit den Elementen Spannungsaufbereitung a, Anpaßschaltung b, Mikrokontroller c und Lichtsensoren d sowie den entsprechenden elektrischen Verbindungen.

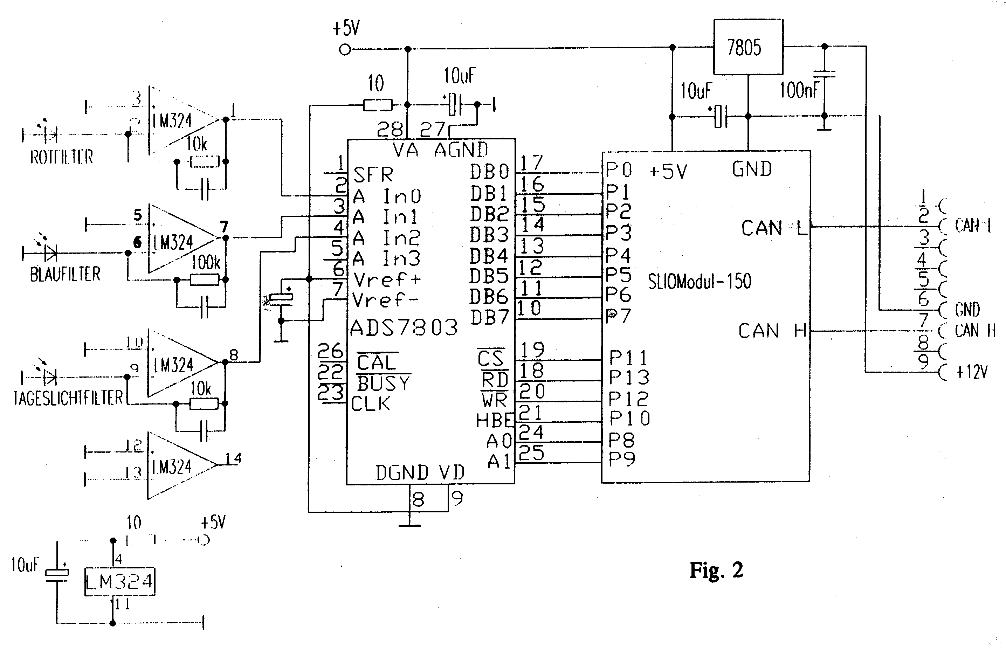

Die Verwendung der Lichtsensoren ist in Fig. 2 detaillierter gezeigt. Als Sensoren können beispielsweise Germaniumsensoren oder Siliziumsensoren (z.B. ein Sensor der Fa. Siemens mit der Bezeichnung BPW21) verwendet werden, wobei der Einsatz von Siliziumsensoren bevorzugt ist, da diese im Wellenlängenbereich des menschlichen Auges eine höhere Empfindlichkeit aufweisen.

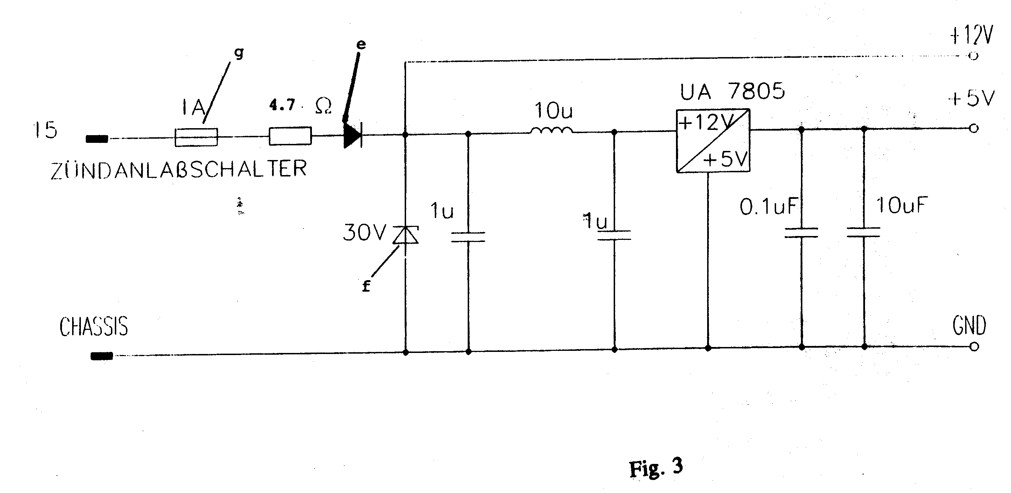

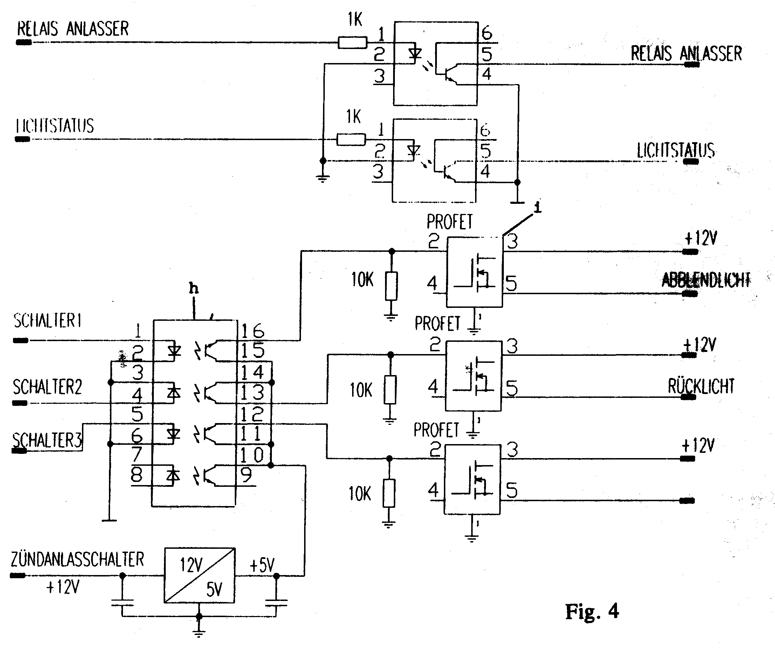

Fig. 3 zeigt beispielhaft eine Spannungsaufbereitungsschaltung, während Fig. 4 eine mögliche Realisierung einer Anpaßschaltung darstellt. Wie in Fig. 3 zu sehen ist, weist die Spannungsversorgung einen Verpolschutz e, einen Überspannungsschutz f sowie eine Sicherung g auf. In der Spannungsaufbereitungsschaltung wird aus der vom Kraftfahrzeug bereitgestellten 12 Volt-Spannung eine 5 Volt-Spannung zur Versorgung der elektronischen Schaltung erzeugt. Zum Schutz gegen Störspannungen aus dem Kraftfahrzeug-Spannungsnetz sind oben erwähnte Schutzeinrichtungen vorgesehen. Die Anpaßschaltung nach Fig. 4 ist vorgesehen, um die Ein- und Ausgänge des automatischen Lichtschalters an die Versorgungsspannung des Kraftfahrzeuges anzupassen. Dabei kann der Lichtschalter beispielsweise mittels Leistungs- und/oder Halbleiterrelais i realisiert werden, wobei die Ansteuerung der Leistungsrelais über die Ausgänge des digitalen Schaltwerkes erfolgt. Die entsprechenden Eingänge werden mittels Optokoppler h in das digitale Schaltwerk eingespeist.

Es ist bevorzugt, daß das automatische Einschalten der Lichtquelle erst dann möglich ist, nachdem der Motor gestartet wurde, besonders bevorzugt ist hierzu eine zusätzliche Verzögerungseinrichtung vorgesehen.

Die Verbindung der einzelnen Elemente untereinander über einen Feldbus bietet die Möglichkeit, den erfindungsgemäßen automatischen Lichtschalter in die moderne Fahrzeugelektronik zu integrieren. Bei Verwendung von normalen Kabelausgängen kann die erfindungsgemäße Vorrichtung allerdings auch bei Gebrauchtfahrzeugen nachgerüstet werden. Weiterhin wäre möglich, den erfindungsgemäßen automatischen Lichtschalter mit einem eventuell vorhandenen Navigations- bzw. Wettersatellitensystem zu verbinden, um so über ein entsprechendes Frühwarnsignal ein rechtzeitiges Einschalten der Lichtanlage zu bewirken.

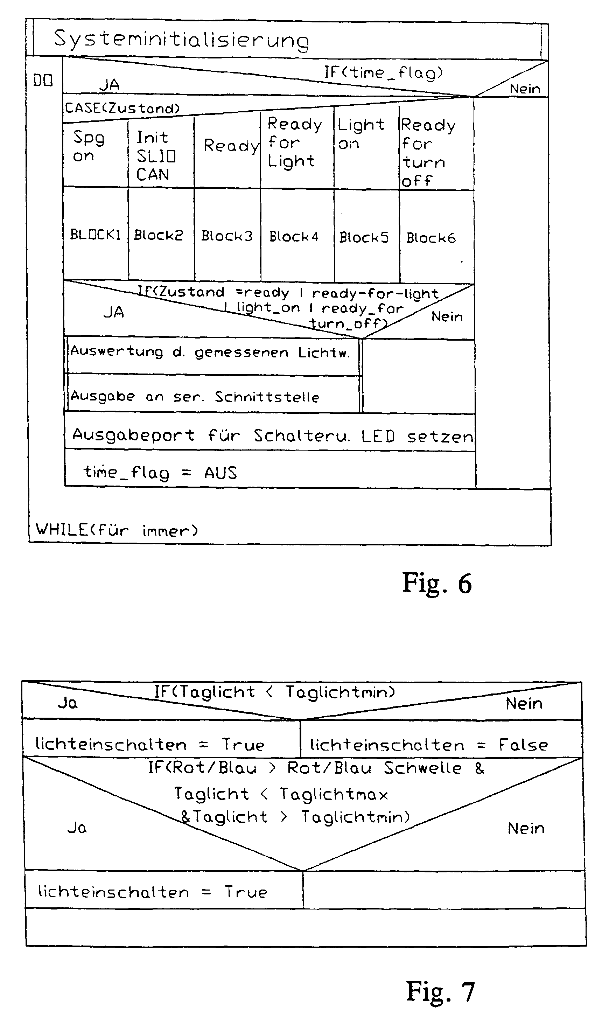

Figuren 6 bis 13 zeigen in Form von Logikablaufplänen die Funktionsweise des erfindungsgemäßen automatischen Lichtschalters beginnend vom Starten des Fahrzeugs über die verschiedenen möglichen Zustände und Lichteinschalt- bzw. Lichtausschaltvorgänge.

Der erfindungsgemäße automatische Lichtschalter weist verschiedene Vorteile auf. Zum einen kann die jeweils gesteuerte Lichtquelle, wie etwa Kraftfahrzeugbeleuchtung, Straßenbeleuchtung oder Gebäudebeleuchtung besser entsprechend den menschlichen Bedürfnissen geschaltet werden, d.h. die Lichtquelle kann in Abhängigkeit von den verschiedensten Umgebungslichtbedingungen ein- und wieder ausgeschaltet werden. Zum anderen kann im Falle der Verwendung der erfindungsgemäßen Vorrichtung oder des Verfahrens für die Steuerung der Kraftfahrzeugbeleuchtung oder der Straßenbeleuchtung eine erhebliche Erhöhung der Sicherheit im Straßenverkehr erzielt werden, da mögliche Fehleinschätzungen oder Vergeßlichkeit eines Kraftfahrzeuglenkers unterbunden werden.

## Patentansprüche

1. Vorrichtung zum automatischen Schalten einer Lichtquelle, wobei die Vorrichtung eine Einrichtung aufweist, die die Lichtquelle in Abhängigkeit von der Farbtemperatur, die dem auf die Einrichtung einfallenden Licht entspricht, schaltet und die Schalteinrichtung mindestens zwei der folgenden Sensoren aufweist:
(a) ein Sensor zum Bestimmen der Intensität des einfallenden Lichts;
(b) ein Sensor zum Bestimmen eines Anteils einer Strahlung eines ersten Wellenlängenbereichs des einfallenden Lichts;
(c) ein Sensor zum Bestimmen eines Anteils einer Strahlung eines zweiten Wellenlängenbereichs des einfallenden Lichts.

2. Vorrichtung nach Anspruch 1, wobei der Sensor b) einen Anteil einer kurzwelligen Strahlung bestimmt.

3. Vorrichtung nach Anspruch 1 oder 2, wobei der Sensor c) einen Anteil einer langwelligen Strahlung bestimmt.

4. Vorrichtung nach Anspruch 2 oder 3, wobei der Sensor zum Bestimmen eines Anteils einer kurzwelligen Strahlung den Anteil des blauen Lichts bestimmt.

5. Vorrichtung nach Anspruch 3 oder 4, wobei der Sensor zum Bestimmen eines Anteils einer langwelligen Strahlung den Anteil des roten Lichts bestimmt.

6. Vorrichtung nach einem der Ansprüche 1 bis 5, wobei mindestens einer der Sensoren ein Einfeldsensor ist.

7. Vorrichtung nach einem der Ansprüche 1 bis 6, wobei mindestens einer der Sensoren ein Mehrfeldsensor ist.

8. Vorrichtung nach einem der Ansprüche 1 bis 7, wobei die Schalteinrichtung eine Einrichtung zum Bestimmen der spektralen Zusammensetzung des einfallenden Lichtes aufweist.

9. Vorrichtung nach Anspruch 8, wobei die Schalteinrichtung eine Einrichtung zum Bestimmen einer der spektralen Zusammensetzung des einfallenden Lichtes entsprechenden Farbtemperatur aufweist.

10. Vorrichtung nach Anspruch 9, wobei die Schalteinrichtung eine Einrichtung zum Ausgeben eines Steuersignals zum Schalten der Lichtquelle aufweist, wobei das Steuersignal in Abhängigkeit von der bestimmten Farbtemperatur ausgegeben wird.

11. Vorrichtung nach Anspruch 9 oder 10, wobei die Schalteinrichtung eine Einrichtung zum Vergleichen der bestimmten Farbtemperatur mit mindestens einem Schwellwert aufweist.

12. Vorrichtung nach einem der Ansprüche 1 bis 11 mit einer Einrichtung zum Bestimmen der Intensität des gesamten Wellenlängenbereiches und zum Bestimmen der Intensität eines bestimmten Wellenlängenbereiches des einfallenden Lichtes und mit einer Einrichtung zum Vergleichen der gesamten Intensität mit der Intensität des bestimmten Wellenlängenbereiches.

13. Vorrichtung nach Anspruch 12, wobei die Bestimmungseinrichtung einen Sensor zur Messung der gesamten Intensität des einfallenden Lichtes und einen Sensor zur Messung der Intensität in einem bestimmten Wellenlängenbereich des einfallenden Lichtes aufweist.

14. Vorrichtung nach einem der Ansprüche 1 bis 13, wobei ferner ein Feuchtesensor vorgesehen ist.

15. Vorrichtung nach einem der Ansprüche 1 bis 14, wobei eine Einrichtung zum Verzögern des Schaltvorganges vorgesehen ist.

16. Vorrichtung nach einem der Ansprüche 1 bis 15, wobei ferner eine Einrichtung zum Durchführen eines Selbsttests der Vorrichtung vorgesehen ist.

17. Vorrichtung nach einem der Ansprüche 1 bis 16, wobei mindestens zwei Sensorkombinationen vorgesehen sind, wobei die Sensorkombinationen mindestens zwei der Sensoren a), b) und c) aufweisen.

18. Verfahren zum automatischen Schalten einer Lichtquelle mit mindestens zwei der folgenden Schritte:
(a) Bestimmung der Intensität des einfallenden Lichtes;
(b) Bestimmung eines Anteils einer Strahlung eines ersten Wellenlängenbereichs des einfallenden Lichts;
(c) Bestimmung eines Anteils einer Strahlung eines zweiten Wellenlängenbereichs des einfallenden Lichts.

19. Verfahren nach Anspruch 18, wobei in Schritt b) ein Anteil kurzwelliger Strahlung bestimmt wird.

20. Verfahren nach Anspruch 18 oder 19, wobei in Schritt c) ein Anteil langwelliger Strahlung bestimmt wird.

21. Verfahren nach Anspruch 19 oder 20, wobei in Schritt b) der Anteil an blauem Licht bestimmt wird.

22. Verfahren nach Anspruch 20 oder 21, wobei in Schritt c) der Anteil an rotem Licht bestimmt wird.

23. Verfahren nach einem der Ansprüche 18 bis 22, wobei die spektrale Zusammensetzung des einfallenden Lichtes anhand der bestimmten Intensitätswerte bestimmt wird.

24. Verfahren nach einem der Ansprüche 18 bis 23, wobei die bestimmte Farbtemperatur mit mindestens einem Schwellwert verglichen wird.

25. Verwendung der Vorrichtung nach einem der Ansprüche 1 bis 17 oder des Verfahrens nach einem der Ansprüche 18 bis 24 in einem Fahrzeug.

26. Verwendung der Vorrichtung nach einem der Ansprüche 1 bis 17 oder des Verfahrens nach einem der Ansprüche 18 bis 24 für die Beleuchtung in oder an Gebäuden.

27. Verwendung der Vorrichtung nach einem der Ansprüche 1 bis 17 oder des Verfahrens nach einem der Ansprüche 18 bis 24 für die Außenbeleuchtung.

## Claims

1. Device for automatically switching a light source, wherein the device comprises a means which switches the light source on and off as a function of the color temperature, which corresponds to the light falling on the device and the switching means comprises at least two of the following sensors:
(a) a sensor for determining the intensity of the incident light;
(b) a sensor for determining a portion of radiation of a first wave length range of the incident light;
(c) a sensor for determining a portion of a radiation of a second wave length range of the incident light.

2. The device according to claim 1, wherein said sensor b) determines a portion of the short-wave radiation.

3. The device according to claim 1 or 2, wherein said sensor c) determines a portion of the long-wave radiation.

4. The device according to claim 2 or 3, wherein the sensor for determining a portion of a short-wave radiation determines the portion of blue light.

5. The device according to claim 3 or 4, wherein the sensor for determining a portion of a long-wave radiation determines the portion of red light.

6. The device according to any one of claims 1 to 5, wherein at least one of the sensors is a single-field sensor.

7. The device according to any one of claims 1 to 6, wherein at least one of the sensors is a multi-field sensor.

8. The device according to any one of claims 1 to 7, wherein the switching means comprises a means for determining the spectral composition of the incident light.

9. The device according to claim 8, wherein the switching means comprises a means for determining a color temperature corresponding to the spectral composition of the incident light.

10. The device according to claim 9, wherein the switching means comprises a means for outputting a control signal for switching the light source, said control signal being outputted as a function of the predetermined color temperature.

11. The device according to claim 9 or 10, wherein the switching means comprises a means for comparing the predetermined color temperature with at least one threshold value.

12. The device according to any one of claims 1 to 11 comprising
a means for determining the intensity of the entire wave length range and for determining the intensity of a specific wave length range of the incident light and
a means for comparing the entire intensity with the intensity of the specific wave length range.

13. The device according to claim 12, wherein the determining means comprises a sensor for measuring the entire intensity of the incident light and a sensor for measuring the intensity in a specific wave length range of the incident light.

14. The device according to any one of claims 1 to 13, wherein also a moisture sensor is provided.

15. The device according to any one of claims 1 to 14, wherein a means for delaying the switching process is provided.

16. The device according to any one of claims 1 to 15, wherein also a means for performing a self test of the device is provided.

17. The device according to any one of claims 1 to 16, wherein at least two sensor combinations are provided, said sensor combinations comprising at least two sensors of sensors a), b) and c).

18. Method for automatically switching a light source comprising at least two of the following steps:
(a) determining the intensity of the incident light;
(b) determining a portion of a radiation of a first wave length range of the incident light; and
(c) determining a portion of a radiation of a second wave length range of the incident light.

19. The method according to claim 18, wherein a portion of short-wave radiation is determined in step b).

20. The method according to claim 18 or 19, wherein a portion of long-wave radiation is determined in step c).

21. The method according to claim 19 or 20, wherein the portion of blue light is determined in step b).

22. The method according to claim 20 or 21, wherein the portion of red light is determined in step c).

23. The method according to any one of claims 18 to 22, wherein the spectral composition of the incident light is determined on the basis of the predetermined intensity values.

24. The method according to any one of claims 18 to 23, wherein the predetermined color temperature is compared with at least one threshold value.

25. Use of the device according to any one of claims 1 to 17 or of the method according to any one of claims 18 to 24 in a vehicle.

26. Use of the device according to any one of claims 1 to 17 or of the method according to any one of claims 18 to 24 for illumination in or on buildings.

27. Use of the device according to any one of claims 1 to 17 or of the method according to any one of claims 18 to 24 for exterior illumination.

## Revendications

1. Dispositif pour la commutation automatique d'une source de lumière, le dispositif présentant un équipement qui commute la source de lumière en fonction de la température de couleur qui correspond à la lumière incidente (tombant) sur l'équipement et l'équipement de commutation présentant au moins deux des capteurs suivants :
(a) un capteur pour déterminer l'intensité de la lumière incidente ;
(b) un capteur pour déterminer une fraction d'un rayonnement d'une première plage de longueurs d'ondes de la lumière incidente ;
(c) un capteur pour déterminer une fraction d'un rayonnement d'une deuxième plage de longueurs d'ondes de la lumière incidente.

2. Dispositif selon la revendication 1, dans lequel le capteur b) détermine une fraction d'un rayonnement à ondes courtes.

3. Dispositif selon la revendication 1 ou 2, dans lequel le capteur c) détermine une fraction d'un rayonnement à ondes longues.

4. Dispositif selon la revendication 2 ou 3, dans lequel le capteur (prévu) pour déterminer une fraction d'un rayonnement à ondes courtes détermine la fraction de la lumière bleue.

5. Dispositif selon la revendication 3 ou 4, dans lequel le capteur (prévu) pour déterminer une fraction d'un rayonnement à ondes longues détermine la fraction de la lumière rouge.

6. Dispositif selon l'une des revendications 1 à 5, dans lequel au moins un des capteurs est un capteur monochamp.

7. Dispositif selon l'une des revendications 1 à 6, dans lequel au moins un des capteurs est un capteur à champs multiples.

8. Dispositif selon une des revendications 1 à 7, dans lequel l'équipement de commutation présente un équipement pour déterminer la composition spectrale de la lumière incidente.

9. Dispositif selon la revendication 8, dans lequel l'équipement de commutation présente un équipement pour déterminer une température de couleur correspondant à la composition spectrale de la lumière incidente.

10. Dispositif selon la revendication 9, dans lequel l'équipement de commutation présente un équipement pour produire un signal de commande pour commuter la source de lumière, le signal de commande étant produit en fonction de la température de couleur déterminée.

11. Dispositif selon la revendication 9 ou 10, dans lequel l'équipement de commutation présente un équipement pour comparer la température de couleur déterminée à au moins une valeur de seuil.

12. Dispositif selon une des revendications 1 à 11, avec un équipement pour déterminer l'intensité de l'ensemble de la plage de longueurs d'ondes et pour déterminer l'intensité d'une plage déterminée de longueurs d'ondes de la lumière incidente et avec un équipement pour comparer l'intensité totale à l'intensité de la plage déterminée de longueurs d'ondes.

13. Dispositif selon la revendication 12, dans lequel l'équipement de détermination présente un capteur pour mesurer l'intensité totale de la lumière incidente et un capteur pour mesurer l'intensité dans une plage déterminée de longueurs d'ondes de la lumière incidente.

14. Dispositif selon une des revendications 1 à 13, dans lequel un capteur d'humidité est en outre prévu.

15. Dispositif selon une des revendications 1 à 14, dans lequel un équipement pour retarder le processus de commutation est prévu.

16. Dispositif selon une des revendications 1 à 15, dans lequel un équipement pour effectuer un autotest du dispositif est en outre prévu.

17. Dispositif selon une des revendications 1 à 16, dans lequel au moins deux combinaisons de capteurs sont prévues, les combinaisons de capteurs présentant au moins deux des capteurs a), b) et c).

18. Procédé de commutation automatique d'une source de lumière avec au moins deux des étapes suivantes :
(a) Détermination de l'intensité de la lumière incidente ;
(b) Détermination d'une fraction d'un rayonnement d'une première plage de longueurs d'ondes de la lumière incidente ;
(c) Détermination d'une fraction d'un rayonnement d'une deuxième plage de longueurs d'ondes de la lumière incidente.

19. Procédé selon la revendication 18, dans lequel une fraction de rayonnement à ondes courtes est déterminée à l'étape b).

20. Procédé selon la revendication 18 ou 19, dans lequel une fraction de rayonnement à ondes longues est déterminée à l'étape c).

21. Procédé selon la revendication 19 ou 20, dans lequel la fraction de lumière bleue est déterminée à l'étape b).

22. Procédé selon la revendication 20 ou 21, dans lequel la fraction de lumière rouge est déterminée à l'étape c).

23. Procédé selon une des revendications 18 à 22, dans lequel la composition spectrale de la lumière incidente est déterminée à l'aide des valeurs d'intensité déterminées.

24. Procédé selon une des revendications 18 à 23, dans lequel la température de couleur déterminée est comparée à au moins une valeur de seuil.

25. Utilisation du dispositif selon une des revendications 1 à 17 ou du procédé selon une des revendications 18 à 24 dans un véhicule.

26. Utilisation du dispositif selon une des revendications 1 à 17 ou du procédé selon une des revendications 18 à 24 pour l'éclairage dans ou sur des bâtiments.

27. Utilisation du dispositif selon une des revendications 1 à 17 ou du procédé selon une des revendications 18 à 24 pour l'éclairage extérieur.
